Europäisches Patentamt

(19) European Patent Office

Office européen des brevets

(11) **EP 0 971 007 B1**

## (12) EUROPÄISCHE PATENTSCHRIFT

(45) Veröffentlichungstag und Bekanntmachung des Hinweises auf die Patenterteilung:
**05.09.2001 Patentblatt 2001/36**

(51) Int Cl.$^7$: **C09D 7/12**

(21) Anmeldenummer: **99890204.3**

(22) Anmeldetag: **23.06.1999**

(54) **Dickschichtig auftragbare Farbe und Verfahren zu deren Herstellung**

In a thick layer coatable paint and process of its preparation

Peinture applicable en couche épaisse et procédé pour la préparer

(84) Benannte Vertragsstaaten:
**AT DE ES FR IT**

(30) Priorität: **23.06.1998 AT 108798**

(43) Veröffentlichungstag der Anmeldung:
**12.01.2000 Patentblatt 2000/02**

(73) Patentinhaber: **Gros, Hans Peter, Dkfm.**
**1190 Wien (AT)**

(72) Erfinder: **Gros, Hans Peter, Dkfm.**
**1190 Wien (AT)**

(74) Vertreter: **Wildhack, Helmut, Dr. Dipl.-Ing.**
**Patentanwälte Wildhack-Jellinek,**
**Landstrasser Hauptstrasse 50**
**1030 Wien (AT)**

(56) Entgegenhaltungen:
**DE-A- 3 433 617       FR-A- 2 306 246**
**US-A- 4 228 055**

**Beschreibung**

Die vorliegende Erfindung betrifft eine neue dickschichtig, ein- oder mehrschichtig, auftragbare Farbe, mit mindestens einem farbgebenden Pigment, mindestens einer Partikel unterschiedlicher Teilchengröße und/oder unterschiedlicher, Form oder Struktur aufweisenden Füllstoff- bzw. Extender-Komponente aus der Gruppe der Calcium-Carbonate, der Aluminium-Magnesium-Silikate und der Kalium-Aluminium-Magnesium-Silikate, mindestens einem - in Form von das Festkörper-Volumen der Farbe in Relation zu deren Festkörper-Masse (Festkörper-Gewicht) steigernden und die Dichte (spezifisches Gewicht) derselben vermindernden (Mikro-)Hohlkörpern, Hohlperlen od.dgl. mit Partikelgrößen von unter 1000 µm vorliegenden- auf Basis eines Polymers bzw. Kunstharzes gebildeten Leichtstoff, weiters mindestens einem Additiv, Zusatz- oder Hilfsstoff aus der Gruppe der Weichmacher, Dispergierhilfsmittel, Antiabsetzmittel, Stabilisiermittel, Entschäumer, Korrosions-Inhibitoren, Thixotropiermittel, Verdickungsmittel und Konservierungsmittel, sowie mit einem oder ohne Zusatz mindestens eines organischen Lösungsmittels, welche Komponenten in Mischung mit einem Bindemittel auf Basis mindestens eines Polymers bzw. Kunstharzes vorliegen, welche Dickschicht-Farbe wasserverdünnbar ist und als wässerige Dispersion vorliegt.

High Solid-Materialien, also Materialien mit hohem Festkörper-Anteil, d.h. beispielsweise mit mehr als 50 % Volums-Festkörper gibt es seit langem in Form von Zweikomponenten-Farben, wobei diese gegebenenfalls mit bis zu fast 100 % Volums-Festkörper vorliegen können. Kunstharz-Farben, gelöst in organischen Lösemitteln können Volums-Festkörper bis zu 55% erreichen, immer unter der Voraussetzung, daß eine möglichst einfache und effektive Verarbeitbarkeit auf einer Baustelle ohne großen apparativen Aufwand erreicht werden kann.

Die auf dem Markt befindlichen Produkte für die Beschichtung von Stahlkonstruktionen, unverzinkt oder verzinkt, verfügen über ein Festkörper-Volumen von etwa 50 %, sofern sie für die Pinselverarbeitung eingestellt sind. Spritzfähig eingestellte Farben haben meist ein um etwa 2 bis 5 % geringeres Festkörper-Volumen.

Nach der Formel zur Berechnung des Festkörper-Volumens (FKv):

$$FKv = \frac{(A - B) \times 100}{A}$$

wobei

$$A = \frac{1000}{\text{Dichte der Farbe}}$$

$$B = \frac{1000 - FKg}{\text{Dichte des Lösemittels}}$$

FKg = Festkörper-Masse ("Festkörper-Gewicht")

war klar, daß eine Erhöhung des Festkörper-Volumens nur erreichbar sein kann, indem

1. für eine Erhöhung des Festkörper-Gewichts und/oder
2. für eine Verringerung der Dichte (spezifisches Gewicht) der Farbe Sorge getragen wird.

Das Festkörper-Gewicht (FKg) einer Farbe setzt sich zusammen aus dem Festkörper-Gewicht des Bindemittels plus dem Festkörper-Gewicht der Additive, welches vergleichsweise sehr gering ist, plus dem Festkörper-Gewicht der Pigmente und der Extender, das sind die trockenen Füllstoffe. Eine bestimmte Menge an Lösemitteln ist für die Viskosität einer Farbe nötig, die Höhe der Viskosität wiederum entscheidet über die Verarbeitbarkeit im Streich-, Roll-, Spritz-, Tauch- oder Flutverfahren. Je geringer die Viskosität, umso mehr Verdünnungsmittel enthält die Farbe, umso geringer ist dann auch das Festkörper-Gewicht und das Festkörper-Volumen. Der Zusatz von Verdünnungsmitteln, insbesondere, wenn Wasser das Lösemittel ist, beeinflußt die Dichte (spezifisches Gewicht) praktisch nur in der zweiten Dezimale, da wasserverdünnbare Farbsysteme bei einem Zusatz von nur 2 bis 3 % Wasser bereits einen exorbitant hohen Viskositätsabfall erleiden.

Die Bindemittel, die auf dem Markt erhältlich sind und zum Einsatz kommen und letztlich Haftung auf Nichteisen-Metalloberflächen aufbauen, sind üblicherweise maximal 50 %ig, daher ist durch Einsatz körperreicherer Bindemittel das Festkörper-Volumen deswegen nicht erhöhbar, weil es diese nicht gibt.

Es bleibt der Weg einer Verringerung der Dichte (spezifisches Gewicht), um zu einem High Solid-Material zu gelangen.

Da eine qualitative und/oder quantitative Änderung von Lösemitteln und Bindemitteln zu einer Verringerung der Dichte nur wenig oder praktisch nichts beitragen kann, kommen für die der vorliegenden Erfindung zugrundeliegenden Überlegungen nur mehr die restlichen Bestandteile der Rezeptur einer zu entwickelnden Dickschicht-Farbe, welche sich insbesondere für den Schutz von größeren Objekten, wie Stahlkonstruktionen, Seilbahn-Stützen, Brücken, Hochspannungsmasten od.dgl., mit einer Nichteisenmetall-Beschichtung, einer Feuer-Verzinkung od.dgl., eignen soll, in Frage.

Es sind dies die

- farbgebenden Pigmente,
- Eisenglimmer- und/oder andere Glimmer-Partikel und die
- Extender

Schwere, also hohe Dichte aufweisende, farbgebende Pigmente können bis zu etwa 10 Masse-%, bezogen auf Gesamtfarbe, enthalten sein und sind z.B. zum Teil im Hinblick auf die geforderte Lichtechtheit und diverse andere Eigenschaften durch leichte, geringere Dichte aufweisende, dann meist organische, Pigmente nicht ersetzbar.

Es ist ein bekanntes und unumgängliches Fakturm, daß Eisenglimmer mit seiner hohen Dichte von etwa 5 $g/cm^3$, der einer der Hauptfaktoren für die relativ hohe Dichte der Gesamtfarbe ist, in einer ordentlichen Korrosionsschutzfarbe wegen seiner, jedem Korrosionsschutzfachmann bekannten, positiven Eigenschaften, insbesondere infolge der durch die Struktur mit äußerst dünnen Plättchen verursachten, wesentlichen Verlängerung der Diffusionswege für **Athmosphärilien**, nicht leicht oder überhaupt nicht substituierbar ist.

Was die Extender sonst betrifft, sind in vielen Fällen in den Rezepturen von Dickschicht-Farben je nach Abbindung und Farbton etwa 10 bis 20 Masse-% Extender enthalten.

Das Pflichtenheft für eine Korrosions-Schutzfarbe, insbesondere für mit Nichteisenmetallen beschichtete Objekte, verlangt, daß der Extender vor allem hohe Wetterbeständigkeit, hohe Lichtechtheit und UV-Beständigkeit sowie hohe Rauchgasbeständigkeit als wesentliche Grundeigenschaften aufweisen muß.

Der Extender darf die Lagerstabilität der Farbe nicht ungünstig beeinflussen und soll bei der Produktion keine störenden Eigenschaften, wie z.B. Staubentwicklung und unerwünschte Einflüsse auf die Viskosität und auf die Thixotropie-Eigenschaflen, ausüben.

Weiters muß er entweder inert sein bzw. darf er höchstens leicht alkalisch reagieren.

Eine weitere wichtige Anforderung besteht darin, daß der gewählte Extender das Bindemittel/Pigment-Verhältnis in der Farbe nicht durch extrem hohe Oberfläche und/oder Bindemittel-Aufnahme ungünstig beeinflußt.

Schließlich darf er auch keine Tendenz zur Luftbindung aufweisen, um die Mikroschaumbildung bei der Produktion, die dennoch nicht gänzlich unterdrückbar ist, nicht noch zu fördern. Dabei ist zu betonen, daß dieses Problem bei der Herstellung von thixotropen Farben besonders relevant ist, wenn zur Erzielung der Strukturviskosität gewisse Polyurethan(PU)-Verdicker eingesetzt werden.

Da mit den üblichen Calcium-Carbonaten und mit den ebenfalls gebräuchlichen Aluminium/Magnesium/Kalium-Silikaten und Aluminium/Magnesium-Silikaten, z.B. Talkum, Ton, Bentonit, Kaolin od.dgl., eine Verringerung der Dichte (spezifisches Gewicht) nicht zu erreichen ist, galt es, für die angestrebte Verringerung der Dichte der Farbe ein Material zu finden, das den oben angeführten Basis-Anforderungen gerecht wird.

Im Zuge dieser Entwicklung hat es sich gezeigt, daß sich dickschichtig auftragbare Farben mit sehr guten Lagerungs-, Verarbeitungs-, Auftrags-, Deck-, Trockungs- und Temperaturwechsel-Eigenschaften sowie mit hoher Lebensdauer selbst bei extremen Witterungsbedingungen dann erreichen lassen, wenn z.B. ein Teil der Extender herkömmlicher Art, durch zumindest einen "Leichtstoff-Extender" ersetzt werden.

Wie aus verschiedenen Druckschriften bekannt geworden ist, eignen sich für die Funktion als die Dichte von Farben senkende Leichtstoff-Komponenten Bläh-Teilchen bzw. Blähkörper, wie insbesondere Hohlkörper bzw. Hohlkugeln od.dgl., sowohl aus organischen als auch aus anorganischen Materialien.

Insbesondere aus ökologischen Gründen und in dem Bestreben, eine den meist rauhen Bedingungen technischer Baustellen gerecht werdenden, einfachen, handwerksgerechten Applikation wurde versucht, ein Farbsystem für Dickschicht-Auftrag mit hohem Festkörper ("High Solid-Produkte") zu schaffen, das wegen des ökologischen Aspektes und, um den strengen, einschlägigen gesetzlichen Bestimmungen zu entsprechen, wasserverdünnbar ist, und sich durch erhöhte Haftung, Stabilität, Langzeit-Resistenz gegen Bewitterung, US-Einfluß und atmosphärische Elektrolyte u.dgl. auszeichnet. Dabei war zu berücksichtigen, daß die Struktur bzw. (Sub-)Mikrostruktur einzelner Komponenten und Oberflächenphänomene im Submikrobereich für die Stabilität eines Anstrichs eine entscheidende Rolle spielen können.

Was den Stand der Technik auf dem Gebiet des Einsatzes von Leichtstoffen in Auftragsfarben betrifft, so sind dazu auf folgende Druckschriften zu nennen:

Aus der FR 2 306 246 C ist ein Oberflächen-Schutz- und -Dekor-Überzugsprodukt für Beschichtungen und Anstriche bekannt geworden, welches zumindest eine flüssige Suspendierphase, ein Bindemittel, einen Füllstoff und, wenn nötig, ein Pigment enthält, wobei vorgesehen ist, daß der Füsstoff zu wesentlichen Teilen bzw. als Hauptanteil der Mischung durch Hohlkugeln aus einem harten und inerten Material gebildet ist. Die genannten Hohlkügelchen haben eine scheinbare Dichte von etwa 0,15 bis 0,50 g/cm$^3$ und eine Granulometrie von etwa 5 bis 50 μm. Sie können in der dort beschriebenen Überzugsmischung 20 bis 60 % des Volumens einnehmen. Für die in dieser Überzugsmischung konkret vorgesehenen Hohlkügelchen sind solche aus - bekanntermaßen relativ hohe Härte und Resistenz aufweisendem - Glas, also Glashohlperlen, angeführt. Infolge dieses Zusatzes von Glashohlperlen wird zwar durchaus eine gewisse Reduktion der Dichte der Überzugsmischung erzielt, allerdings sind hier infolge der Dichte von Glas im Bereich um 2,5 g/cm$^3$ der Dichteverringerung und Festkörpervolumsanteils-Erhöhung relativ enge Grenzen gesetzt. Ergänzend sei noch auf das konkrete Beispiel in der FR-C verwiesen, dem zu entnehmen ist, daß bei der Herstellung der dortigen Überzugsmischung einer Ausgangsmischung von wässeriger Bindemittelsuspension mit 50% Glashohlkügelchen zur Hebung des Körpers und der Konsistenz der Auftragsmasse Ton, und im speziellen Bentonit, z.B. in einer untergeordneten Menge von 0,5 % zugesetzt wird. Gleich an dieser Stelle sei festgehalten, daß Ton und somit Bentonit im wesentlichen durch Verwitterung, also durch weitgehenden Abbau der Silikatstruktur, entstandene Aluminosilikate sind, deren sie aufbauende Partikel äußerst feinteilig und weich sind.

In der DE 34 33 617 A1 ist ein Anstrichmittel bzw. eine Kunststoffdispersions-Farbe mit mindestens einem Füllstoff oder einem glashaltigen Füllstoffgemisch, Wasser, Farbstoff und/oder Farbpigment sowie gegebenenfalls Mattierungsmitteln, Verarbeitungshilfsmitteln und/oder Zusatzmitteln beschrieben, wobei der glashaltige Füllstoff mit Glashohlkugeln und feinteiligen Glashohlkörpern gebildet ist. Weiters zeichnet sich das dort beschriebene Anstrichmittel dadurch aus, daß es mindestens zwei unterschiedliche Füllstoffe mit unterschiedlichen Teilchengrößen und/oder unterschiedlichen Teilchenformen oder -Strukturen enthält.

Gemäß einer bevorzugten Ausführungsform der dort beschriebenen Anstrichmittel können in der Auftragsmischung fakultativ zusätzlich zu den zwingend die Glashohlkugeln einschließenden Komponenten Kunststoffmikrokapseln und/oder Kunststoffmikrohohlkugeln vorhanden sein, welche im übrigen zumindest teilweise mit Wasser gefüllt sein können.

Eine Variante des Anstrichmittels gemäß der DE-A1 sieht vor, daß von den mindestens zwei unterschiedlichen Füllstoffen mindestens ein Füllstoff eine kugelähnliche, ellipsoidförmige oder halbkugelförmige Form oder Struktur aufweist und mindestens ein weiterer Füllstoff eine blättchen-, scheiben-, stäbchen-, nadel- oder zylinderähnliche Struktur oder Form aufweisen soll. Weiters sind dort auch noch faserförmige Füllstoffe genannt. Eine gezielte Hervorhebung einer bestimmten Partikelform ist nicht erfolgt. Es handelt sich hier um eine unspezifische Aufzählung an sich üblicher Partikelformen von Füllstoffen für Farben, wobei die Forderung nach gezielter Auswahl zweier verschiedener Partikel-Grundformen eher theoretischen Charakter hat, da n vielen Füllstoffen schon ohne jede gezielte Auswahl Partikel mit Formen der beiden, in der DE-A1 angegebenen Formkategorien von vornherein gleichzeitig vorhanden sind.

Im konkreten Beispiel der DE 34 33 617 ist als "zweiter" Füllstoff kalziniertes Kaolin mit blättchenartiger Struktur genannt. Wie schon oben ausgeführt, stellen Kaoline, ebenso wie Tone, Bentonite und Morillonite Verwitterungsprodukte von verschiedenen Silikaten dar, und dementsprechend klein sind die sie aufbauenden Partikel, und deren ursprüngliche Strukturen und Formen sind dementsprechend weitgehend verändert und "abgerundet". Dies gilt selbstverständlich auch für kalziniertes Kaolin, wobei es beim Kalzinieren unter Umständen auch zu einer Art Sinterung besonders dünner Randbereiche der blättchenartigen Partikel und somit zu einer zusätzlichen Abrundung dieser Bereiche kommen kann.

Zum technologischen Hintergrund ist ergänzend noch auf die US 4 228 055 zu verweisen, welche eine wässerige Matt-Anstrich-Zusammensetzung betrifft, in welcher feinteilige Perlen auf Kunststoffbasis als Mattierungsmittel vorliegen.

In keiner der genannten Druckschriften ist auch nur ein Hinweis auf das insbesondere bei der Bereitung der Anstrichmittel auftretende Problem enthalten, das vom Fachmann dann zu erwarten war, wenn ein Füllstoff, Extender, Pigment od.dgl., also eine Komponente der dem Anstrichmittel zugrundeliegenden Mischung in unverwitterter, also in nicht abgebauter und rand-abgerundeter, Form einzusetzen ist und bei der Zubereitung der Farbe beim intensiven Rühren bei hohen Scherkräften mit feinen Hohl-Teilchen, also (Mikro-)Hohlkugeln auf Polymerbasis, zusammentrifft, deren Wandungen weich sind und keinesfalls die Härte von wie oben beschriebenen Glashohlperlen aufweisen. Dieses intensive mechanische Rühren ist besonders dann von Wichtigkeit, wenn in der Farbmischung der Einsatz von Glimmer, und insbesondere von Eisenglimmer (Hämatitglimmer), vorgesehen ist, welche beide mit feinen plättchenartigen Partikeln aufgebaut sind, die eine äußerst hohe Tendenz zum Absetzen und Zusammenpacken aufweisen.

Gerade diese als feine und besonders dünne Plättchen vorliegenden Partikel zeichnen sich, da sie im wesentlichen unverwittert, also etwa im ursprünglichen Zustand vorliegen, was z.B. durch ihren hohen Glanz manifestiert ist, entsprechend hohe minderalogische Härte und demgemäß besonders harte und dünne, also besonders scharfe, schneidenartige Ränder auf. Dazu kommt deren relativ hohe Dichte, im Falle von Glimmern im Bereich von 2,5 g/cm$^3$, und ganz besonders ins Gewicht fallend, bei Eisenglimmern im Bereich von immerhin etwa 5 g/cm$^3$.

Diese besondere Scharfkantigkeit der Ränder oder plättchenförmigen Partikel im Verein mit deren hoher Dichte, u.zw. insbesondere im Fall von Eisenglimmer, ließ besonders hohe Nachteile dann erwarten, wenn die beschriebenen, scharfschneidigen Ränder der im einzelnen extrem dünnen Plättchen mit den weichen Polymerhüllwänden der (Mikro-)Hohlkörper auch nur bloß in Berührung kommen und vielmehr noch dann, wenn dies unter Einwirkung hoher und für eine ordnungsgemäße Dispergierung unabdingbarer Scherkräfte erfolgt. Es war demnach geradezu ein vielfaches Aufschneiden der ohnedies äußerst dünnen und weichen (Mikro-)Hohlkörper-Außenmembranen und letztlich eine Art Mazeration der Polymer-Hohlkörperchen zu erwarten. Durch das Zerstören der Hüllmembranen der Hohlkörper geht aber deren für den Farbkörper angestrebte wesentliche Eigenschaft der geringen Dichte und selbstverständlich alle anderen, ihnen durch eine unverletzte sphärische glatte Oberfläche dieser hohlen Partikel der Farbe gezielt verliehenen Eigenschaften, wie z.B. günstige Streich- und Spritzcharakteristik, hervorragende Verlaufeigenschaften, arbeitstechnisch vorteilhafte Thixotropieeigenschaften u.dgl. verloren.

Die vorliegende Erfindung beruht nun darauf, daß entgegen der beschriebenen, klaren Erwartungslage gefunden wurde, daß die geschilderten Bedenken bezüglich einer "Verletzung" der Hohlkörper, für deren Bestehen ja auch der Stand der Technik spricht, der an keiner Stelle eine gleichzeitige Anwesenheit von (Mikro-)Hohlkörpern und Glimmer bzw. insbesondere Eisenglimmer-Pigmentpartikeln erwähnt, in der konkreten Praxis im wesentlichen unbegründet sind.

Die Ergebnisse von etlichen Versuchsreihen unter verschiedenen konkreten Produktionsbedingungen haben gezeigt, daß der oben beschriebene Effekt eines "Aufschneidens" der Hohlkörper nicht oder nur in äußerst geringem und daher nicht störendem Ausmaß auftritt und sich somit die vermuteten Nachteile in der Realität nicht bestätigen.

Als Grund dafür wird angenommen, daß selbst unter heftigen Rührbedingungen und bei Einwirkung hoher Scherkräfte echte "Randkollisionen" nur im äußerst untergeordnetem Ausmaß auftreten und daß es ganz knapp vor denselben zu einer Art "Abschmieren" bzw. "Abgleiten" der Glimmerplättchen an den organophil glatten Oberflächen der kleinen Hohlkugeln kommt.

Gegenstand der Erfindung ist somit eine in Dickschicht auftragbare Farbe der eingangs genannten Art, deren wesentliche Merkmale darin bestehen,

- daß die für den Korrosionsschutz vorgesehene, auf metallischem Untergrund dickschichtig auftragbare Farbe die - neben den oben genannten sonstigen Komponenten vorliegenden oder zum Teil an die Stelle mindestens einer der oben genannten Komponenten bzw. an die Stelle einer Extender-Komponente tretenden, das Festkörper-Volumen der Farbe in Relation zu deren Festkörper-Masse (Festkörper-Gewicht) steigernden und die Dichte (spezifisches Gewicht) derselben vermindernden - (Mikro-)Hohlkörper auf Polymer- bzw. Kunstharz-Basis entweder allein oder aber zusammen mit Partikeln mindestens eines anorganischen, mineral-basierten Leichtstoffes, enthält,
- daß dieselben in in inniger Mischung mit mindestens einer glimmerartigen Extender-Komponente aus der Gruppe Eisenglimmer bzw. Eisenoxidglimmer (Hämatit) und silikatischen Glimmer vorliegen und
- daß die Dickschicht-Farbe im auftragsfähigen, "nassen" Zustand eine Dichte (ein spezifisches Gewicht) von 0,80 bis 1,50 $g/cm^3$ aufweist.

Es liegt also das Hauptgewicht der Erfindung auf der - bis vor kurzem als bedenklich angesehenen - Kombination von echten Glimmerpartikeln und -insbesondere für Korrosionsschutzfarben fast unabdingbar - Eisen(oxid)- bzw. Hämatitglimmer-Partikeln, und (Mikro-)Hohlkörpern auf Polymerbasis.

Die in der erfindungsgemäßen, neuen Dickschicht-Farbe einzusetzenden Bindemittel-Systeme können alle für den vorgesehenen Zweck bisher verwendete Arten von Kunstharz-Dispersionen sein, wobei bevorzugt Systeme auf Basis von Acrylat-Harzen zu nennen sind.

Was die farbgebenden Pigmente betrifft, so sind der Auswahl derselben keinerlei Grenzen gesetzt, wenn sie nur den Bedingungen und Forderungen für bisher im Außenbereich eingesetzte Korrosions-Anstrichfarben entsprechen. Ohne jeden Anspruch auf Vollständigkeit seien hier beispielsweise "körnige" Eisenoxid-Pigmente, Titandioxid-Pigmente od.dgl. genannt.

Die für den Einsatz in den erfindungsgemäßen Dickschicht-Farben in Frage kommenden Extender unterscheiden sich in ihrer Natur ebenfalls nicht von den bisher auf dem Sektor dieser Spezialfarben für Korrosions-Schutz eingesetzten Füllstoff-Substanzen. Ändern kann sich im Falle der neuen Farben in der Praxis bloß die jeweils eingesetzte Masse (Gewicht) der Extender in Relation zur Masse (Gewicht) der anderen Komponenten, nämlich dadurch, daß es zum Teil-Ersatz der herkömmlichen Extender mit den erfindungsgemäß in den Farben einzusetzenden Leichtstoff-Partikeln, also insbesondere Hohlkugeln, kommt, oder daß diese zusätzlich eingebracht werden.

Wesentliche Gruppen von Additiven und Hilfsstoffen sind oben schon genannt worden und bei deren Auswahl ist, wie sonst auch immer, darauf zu achten, daß manche dieser Komponenten selbst miteinander reagieren können und daher z.B. nicht unmittelbar hintereinander eingemischt werden dürfen. Weiters können bestimmte Verdicker, z. B. auf Polyurethan(PU)-Basis, die Luftretention in den Produktionsansätzen fördern und sollten daher günstigerweise vermieden werden. Die Probleme der Schaumbildung, und insbesondere der Bildung von Mikro-Schaum, der Schäumung während der Produktion und jener bei der Verarbeitung der Farbe können z.B. durch zwei assoziativ wirkende Entschäumungs-Substanzen, die an verschiedenen Stellen der Rezeptur zugegeben werden, zufriedenstellend gelöst werden.

Ein weiterer Vorteil der neuen wasserverdünnbaren Dickschicht-Farben mit hohem Festkörper-Volums-Anteil besteht insbesondere darin, daß gegebenenfalls auf den Einsatz von organischen Lösungsmitteln überhaupt verzichtet werden kann, was insbesondere Vorteile im Sinne einer ökologiefreundlichen Technik bringt. In jedem Fall ist durch die Abstellung der neuen Farben mit hohem Festkörper-Volumen und verringerter Dichte auf praktisch volle Wasser-Verdünnbarkeit der eventuell doch zuzusetzende Anteil an herkömmlichen Lösemitteln wesentlich eingeschränkt. Sie dienen, wenn sie überhaupt eingesetzt werden, z.B. als Filmbildehilfe und können weiters für die Einstellung der Viskosität der Farbe od.dgl. herangezogen werden. In Frage kommen je nach Spezifikation Lösemittel mit unterschiedlichen Siedepunkt-Bereichen, wobei als Beispiele, und keineswegs vollständig, Lösemittel auf Kohlenwasserstoff-Basis, wie Benzine, weiters höhere Alkohole od.dgl. zu nennen sind.

Es soll an dieser Stelle nochmals darauf hingewiesen sein, daß, insbesondere im Fall des Einsatzes von Eisen(oxid)glimmer als glimmerartige Komponente - und dies bei besonders strapazfähigen und witterungsbeständigen Anstrichfarben zu beträchtlichen Anteilen - in der Mischung das hohe spezifische Gewicht von Hämatit von bis zu 5,2 g/cm$^3$ ganz wesentlich zu Buche schlägt und daß gerade für diesen Einsatz dieser für die hervorragenden Eingschaften wesentlichen, jedoch zu einem hohen Gewicht bzw. zu einer hohen Dichte der Farbe wesentlich beitragenden, Eisenglimmer-Komponente deren durch die vorliegende Erfindung erst ermöglichte Kombination mit der die Dichte der Farbe in wesentlichem Maß herabsetzenden und deren Volumen steigernden Polymer-Hohlkörper-Komponente von hoher Bedeutung ist.

Wie schon aus den Ausführungen weiter oben hervorgeht, bilden einen besonders bevorzugten Gegenstand der Erfindung dickschichtig auftragbare "Leichtfarben" auf Basis einer neuen Kombination von polymerbasierten (Mikro-)Hohlkörperchen mit Eisen(oxid)glimmer, welcher eine infolge des besonders dichten Aneinanderliegens der feinen Glimmerplättchen in der Farbe gleich nach deren Auftrag und dann in optimalem Ausmaß im fertigen Farbüberzug und dies auch nach Jahren, eine besonders hohe Korrosionsfestigkeit des Anstriches gewährleistet. Demgemäß stellt die Ausführungsform der neuen Dickschichtfarbe gemäß **Anspruch** 2 im Rahmen der Erfindung eine besonders vorteilhafte Ausführungsform derselben dar.

In den **Ansprüchen** 1 und 2 sind nicht zuletzt die mit den neuen in dicker Schicht auftragbaren Farben erzielbaren, im Vergleich zu herkömmlichen Dickschicht-Korrosions-Farben mit Eisenglimmer-Pigment-Gehalt erzielbaren, wesentlich niedrigeren Werte von deren Dichte bzw. "spezifischem Gewicht" genannt.

Im Rahmen der Erfindung besonders bevorzugt kommen in den neuen wasserverdünnbaren Dickschicht-Farben-Systemen gemäß der Erfindung (Mikro-)Hohlkörper aus Kunstharzen, wie sie im **Anspruch** 3 genannt sind, zum Einsatz.

Beispielhaft seien hier "Organische Hohlkugeln" auf Basis von "Polyalkylen-Polymeren mit dem Handelsnamen "Expansel" (z.B. 551, WE, DE) oder solche auf "Styrol-Acrylat-Basis" mit der Handelsbezeichnung "Ropaque" (z.B. OP-62-LDE, OP-84, HP-91) genannt.

Es soll gleich hier erwähnt werden, daß die genannten Kunstharz-(Mikro-)Hohlkörper auch zusammen mit den oben behandelten Leichtstoff-Mikro-Partikeln auf Mineralbasis zum Einsatz kommen können, wobei allerdings auf gegenseitige Verträglichkeit und Kompatibilität im jeweiligen Gemisch der Komponenten zu achten ist, die in der überwiegenden Zahl der Fälle auf rein theoretischer Basis kaum voraussagbar, sondern nur durch einschlägige Versuchs- und Testreihen praxisnah eruierbar sind.

Es ist jedoch, wie sich zeigte, besonders vorteilhaft, in den für die eingangs näher beschriebenen Zwecke vorgesehenen, wasser-verdünnbaren, dickschichtig auftragbaren Farben als Leichtstoff-Komponente eher die genannten Mikro-Hohlkörper auf organischer, also Polymer-Basis, einzusetzen. Diese Kunstharz-Hohlkörper weisen, bezogen auf das einzelne Partikel, hohe mechanische Stabilität trotz ihrer Gas- bzw. Lufteinschlüsse auf, was sich insbesondere für die Herstellung der Farben, bei welcher sich erhebliche Scherkräfte während der intensiven Mischvorgänge nicht vermeiden lassen, günstig auswirkt.

Die erfindungsgemäß in völlig neuer, gezielter Kombination mit Glimmern eingesetzten Kunstharz-Hohlkörperchen vereinigen in sich die geforderte diesbezügliche Robustheit synergistisch mit einer für wässerig-organische Dispersions-Farb-Systeme der in Rede stehenden Art optimalen Einbindungs-Eigenschaften, Benetzbarkeits- und Thixotropier-Eigenschaften, Stabilität gegenüber Chemikalien, Witterungsbeständigkeit, Hitze-, Licht- und UV-Stabilität u.dgl. Sie verleihen der Farbe einen auftragstechnisch unproblematischen plastischen Körper und dies in besonderem Ausmaß in Kombination mit Hämatit-Glimmer als Korrosionsschutz-Komponente.

Bevorzugterweise kommen in den neuen Dickschicht-Farben Kunstharz-Mikro-Hohlkörper mit Dichten innerhalb der im **Anspruch** 4 gemäß einer ersten Ausführungsvariante genannten Bereichsgrenzen zum Einsatz, womit insbesondere eine echte und sehr effektive Verringerung der Dichte der Farben erreicht werden kann.

Besonders bewährt hat sich der Einsatz von Mikro-Hohlkörpern mit Partikelgrößen innerhalb der gemäß der zweiten Ausführungsvariante des **Anspruches** 4 vorgesehenen Bereiche, wobei sich weiters gezeigt hat, daß die Einhaltung dieser Größenverhältnisse der neuen Farbe besonders günstige Produktions-, Lagerungs- und Auftragseigenschaften verleiht. Als mittlere Teilchengrößen seien solche von etwa 1 µm bis hinunter zu etwa 0,4 µm (z.B. bei "Ropaque") und bevorzugt im Bereich von 10 bis 50 µm (z.B. bei "Expansel") genannt.

Das Verhalten der Hohl-Partikel in der nassen und in der nach deren Auftrag und erfolgter Trocknung an Ort und Stelle letzten Endes trockenen Farbe wird insbesondere durch die Ausbildung und Struktur ihrer Oberfläche bestimmt, worüber der **Anspruch** 4 in seiner dritten Variante näher Auskunft gibt.

Bei den umfangreichen Arbeiten zur Entwicklung der neuen Farbe sowie bei unter deren Verwendung hergestellten Versuchs-Anstrichen in der Praxis hat sich der Einsatz der in **Anspruch** 5 detailliert genannten Mikro-Hohl-Partikel besonders bewährt.

Besonders vorteilhaft ist der Einsatz der neuen Mikro-Hohlkörper in den erfindungsgemäßen Farb-Systemen innerhalb der für eine erste Ausführungsform im **Anspruch** 6 im einzelnen genannten Mengen-Bereiche.

Was die für den Dickschicht-Auftrag der neuen Farbe günstigen Bereiche des Verhältnisses von deren Volums-Anteil zum Gesamt-Volumen aller Festkörper-Komponenten betrifft, so gibt der **Anspruch** 6, Variante 2, die im Rahmen der Erfindung bevorzugten Bedingungen hiefür wieder.

Bezüglich der maximalen Beladung der neuen Farben im Naß-Zustand mit Festkörper-Komponenten unter Einschluß der gemäß der Erfindung in neuer Weise zum Einsatz kommenden Kunstharz-Hohlkörper, sind für eine dritte Ausführungsvariante, ebenfalls im **Anspruch** 6, die entsprechenden, vorteilhaften Zahlenbereiche genannt.

Dem **Anspruch** 7 sind unter Einbeziehung jeder der wesentlichen Komponenten ganz konkret deren Mengen- bzw. Anteils-Bereiche für konkrete Farben im einzelnen zu entnehmen, wobei selbstverständlich auf die Bereiche der Gehalte an den in der Farb-Mischung neuen Leichtstoff-Partikeln, insbesondere Hohlkörpern, und an den Eisenoxid-Partikeln entsprechend Rücksicht genommen ist.

Was die im Rahmen der erfindungsgemäßen Farben zum vorteilhaften Effekt einer Erhöhung des Festkörper-Volumens und einer Senkung der Dichte der Farbe gegebenenfalls zusätzlich beitragende mineralogische Leichtstoff-Komponenete betrifft, so sei dazu folgendes kurz ausgeführt:

Im **Anspruch** 8, u.zw. in dessen erstem Teil, sind einige im Rahmen der Erfindung bevorzugt einsetzbare, derartige, kleine Partikel mit geringer Dichte liefernde, mineralische Substanzen natürlicher oder industrieller Herkunft genannt, welche zusätzlich zu den mineralbasierten Hohlkörpern enthalten sein können. Als Beispiele seien an dieser Stelle geblähte (Mg-)Al-Silikate, z.B. mit den Handelsbezeichnungen: "Armospheres 150, CN oder XOL-200"; "Stiff 100/0" und "Extendospheres SF-10, SF-14, SL-150, SLG, XDL-200"; sowie Blähglas-Produkte, z.B. solche mit den Handelsbezeichnungen "PORAVER"; "Mikro-Glashohlkugeln K 1, K 15, K 20, K 25, K 37, K 46, S 22"; "Microcel M 18, M 23, M 28, M 35" und "Micro 100, 250".

Der **Anspruch** 8 gibt in seiner zweiten Ausführungsvariante Auskunft über die im Rahmen des neuen Farben-Systems günstigsten Bereiche der Dichte der eventuell zusätzlich zu den Polymerhohlkugeln zum Einsatz vorgesehenen Leichtstoff-Partikel (wobei zu betonen ist, daß darunter weder die Schüttdichte dieser Leichtstoffe, noch nur die Dichte des die Leichtstoff-Partikel selbst, also etwa die Dichte des die Hülle der mineralbasierten Mikro-Hohlkugeln bzw. deren Wandung bildenden Materials (ohne Gaseinschlüsse) zu verstehen ist).

Bevorzugte Partikelgrößen der zum Einsatz in der neuen Dickschicht-Farben vorgesehenen, mineralbasierten Leichtstoffe sind im dritten Teil des **Anspruch** 8 angegeben.

Eher nur qualitativ können die im **Anspruch** 8 für dessen vierte Ausführungsform gemachten Angaben bezüglich der ja selbst im Mikroskop nur schwierig sichtbar zu machenden oder durch elektronenmikroskopische Analysen eruierbaren, für die Eigenschaften der neuen Farben bevorzugten Oberflächeneigenschaften sein, wobei prinzipiell jedenfalls festzuhalten ist, daß eine zu hohe Oberfläche der Hohl-Partikel (bezogen auf das Volumen der einzelnen Teilchen) eine zu hohe Benetzbarkeit oder Kapillar-Saug-Tendenzen der einzelnen Partikel unerwünscht sind.

Außer den einzelnen Zusammensetzungen der neuen Farben besteht ein weiterer Gegenstand der Erfindung in einer grundsätzlichen Technik von deren Herstellung, wobei die in **Anspruch** 9 angegebene Vorgehensweise unter Einsatz von im mit Wasser (z.B. etwa 85 ± 2 %) angefeuchteten Zustand vorliegenden Mikro-Hohlkörpern aus Kunststoff den wesentlichen Vorteil einer Ausschaltung der durch die äußerst mobilen und sofort in die Gasphase übergehenden Stäube der Mikro-Hohl-Partikel gegebenen Probleme bringt. Diese äußerst "leichten" und äußerst kleinen Partikel verursachen u.a. dann Probleme, wenn sie trocken und womöglich noch zusätzlich elektrisch aufgeladen vorliegen.

Um die eventuelle Gefahr einer Verletzung der "Hüllen" der Mikro-Hohlkugeln durch die scharfkantigen Eisenglimmer- oder Glimmer-Teilchen, insbesondere durch die Eisen-Glimmer-Partikel, beim Bereiten der neuen Dickschicht-Farben möglichst hintanzuhalten, ist, wie sich zeigte, die Einhaltung der angegebenen Reihenfolge der Zugabe der herkömmlichen Komponenten sowie letztlich der in erfindungsgemäßen Kombination vorgesehenen Leichtstoff-Komponente - z.B. in der Endphase - vorteilhaft.

Ein weiterer, wesentlicher Gegenstand ist die Verwendung der neuen, mit der Kombination von Polymer-Hohlkügelchen, welche, was abschließend besonders betont sei, nicht mehr- oder vielzellig, sondern mit jeweils nur einem Hohlraum vorliegen, für Schutzanstriche auf metallbeschichteten Konstruktionen, insbesondere auf metallischen Untergründen, wie sie im einzelnen im **Anspruch** 10 genannt sind.

Beispiel:

Anhand der folgenden, auf Basis einer größeren Anzahl von Versuchsansätzen mit jeweils wechselnden, innerhalb der jeweils angegebenen Grenzen liegenden Mengen der einzelnen Komponenten, erstellten Rezeptur wurden für Dickschicht-Anstriche auf mit einer Feuerverzinkung versehenen Eisenkonstruktionen, Hochspannungsmasten, geeignete wasser-verdünnbare Kunstharz-Dispersions-Farben in Versuchsmengen im Bereich von jeweils etwa 10 kg hergestellt und an einer feuerverzinkten Eisen-Verstrebungs-Konstruktion mit Nieten und Schrauben an starker Witterungs- und Sonneneinwirkung ausgesetzten Stellen in natürlicher Umgebung getestet. Es wurden auch die Bewitterungs-Testreihen in einem Bewitterungsschrank durchgeführt.

Generalrezeptur:

| Generalrezeptur: | |
|---|---|
| 44 - 54 % | Bindemittel Reinacrylat bzw. Styrolacrylat (ca. 50 %ige wässerige Dispersion) |
| 6 - 14 % | Farbgebende Pigmente, (an dieser Stelle können auch 0,6 - 8 % Pigmentteige eingesetzt werden) |
| 12 - 20 % | Extendergemisch, bestehend aus Carbonaten Quarzmehl, Talkum od.dgl. |
| 5 - 30 % | Eisenglimmer (nur weiße oder ganz helle Farben können wegen der dunkelgrauen Eigenfarbe des Eisenglimmers nur weniger davon enthalten und in entsprechender Menge an dessen Stelle helle silikatische Glimmer) |
| 0 - 8 % | Lösemittel verschiedener Siedepunktbereiche |
| 0,5 - 3 % | Diverse Additive (Dispergierhilfen, Antiabsetzmittel, Entschäumer, Korrosionsinhibitoren od.dgl.) |
| 0 - 8 % | Weichmacher |
| 0 - 8 % | Verdicker, z.B. Polyurethan-Verdicker und/oder anorganische, verdickend wirkende Substanzen, wie Bentonit, Kieselerde od.dgl. |
| 0 - 1 % | Konservierungsmittel |
| 0,15 - 5 % | Leichtstoff-Hohlkörper |

Die Bereitung der Farben bzw. der Herstellung erfolgte in der von der Herstellung herkömmlicher Farben an sich bekannten Weise mit einer jeweils optimal gewählten Sequenz der Zugaben der einzelnen Komponenten in einem Mischer mit einem Rührwerk, z.B. Dissolver.

Danach wurden handelsüblich in angefeuchtetem Lieferzustand vorliegende Kunstharz-Hohlkörper in einer jeweils einzusetzenden Menge eingebracht und schließlich wurde nachgerührt.

Die so erhaltene Dickschicht-Farbe wurde in Gebinden zwei Wochen lang ohne Bewegung oder Rühren gelagert Dann wurden nach verschiedenen Auftrags-Verfahrensarten, insbesondere Spritzen, Rollen und Pinselauftrag, die so erhaltenen Farben auf die genannten feuerverzinkten Objekte bzw. auf entsprechend präparierte Testplättchen aufgebracht und den jeweiligen Standard-Tests unterzogen. Es wurden folgende Ergebnisse erzielt.

Bei einem Zusatz von 1,53 % Kunststoff-Hohlkörpern (Basis: Vinylidenchlorid/Acrylnitril; Handelsname: "Expancel"; Hersteller: Casco Products, Schweden) zu einer Farbe mit einer Dichte von $1,50 \pm 2$ g/cm$^3$, Bindemittel Reinacrylat 50 %ig, und einem Eisenglimmergehalt von 16,8 Masse-% verringert sich die Dichte um 17% auf $1,20 \pm 2$ g/cm$^3$, das Festkörper-Volumen steigt von 51 % auf 63 % , also um 23,5 %.

Bei einem Zusatz von ca. 4,20 % Hohlkörpern verringert sich die Dichte in extremer Weise von 1,47 auf 0,96 g/cm$^3$, also um 34,94 %, der Festkörper-Volumsanteil steigt von rund 50 % auf 68,11 %.

Die Witterungs- und UV-Beständigkeit lag, wie überraschend gefunden wurde, teilweise über den entsprechenden Werten, die sich mit herkömmlichen Dickschicht-Farben ohne Leichtkörper-Zusatz erzielen ließen.

Eine im laufenden Einsatz befindliche herkömmliche Kunstharz-Farbe auf Lösemittel-Basis (35 % Lösemittel) mit einer Dichte von 1,55 g/cm$^3$ und einem Festkörper-Volumen von 50 % enthält pro kg rund 350 g Lösemittel. Bei Verwendung von ca. 10 Tonnen für einen Auftrag gehen daher 3.500 kg Lösemittel in die Atmosphäre. Bei einer vom Kunden verlangten Trockenfilmdicke (TFD) von 70 μm benötigt man pro m$^2$ theoretisch 1,55 mal 140 μm Naßfilmdicke (NFD), das sind 217 g Farbe pro m$^2$.

Beim Spritzen von Teilen von Überlandleitungs-Masten - eine unter dem Namen Werkstatt-Beschichtung bekannte, laufend geübte Verarbeitungsweise - sind etwa 100 % Spritzverlust (Erfahrungswert) zu kalkulieren. Es werden demnach 434 g Farbe pro m$^2$. benötigt.

Mit der oben erwähnten neuen Leichtfarbe mit 68,11 % Festkörper-Volumen erreicht man die geforderte Trockenfilmdicke von 70 µm mit rund 103 µm (Naßfilmdicke NFD) mal 0,96 (Dichte) = 98,67 g/m². Infolge etwa 100 % Spritzverlust: 98,67 mal 2: das sind 197,34 g nasse Farbe auf 1 m². Multipliziert man mit üblichen Marktpreisen in ATS Materialeinsatz per m², so gelangt man zu folgenden Resultaten.

| | | | |
|---|---|---|---|
| 1 kg | Kunstharzfarbe auf Lösemittelbasis, handelsüblich, Industriepreis | ATS 60,-- |
| 1 kg | Leichtfarbe mit Hohlpartikeln, wasserverdünnbar, (Bezeichnung "Passivit H$_2$O leicht", registrierte Marke) | ATS 75,-- |

| Herkömmliche Kunstharzfarbe: | | |
|---|---|---|
| 434 g/m² x 60,-- Materialeinsatzkosten pro m² Passivit H$_2$O leicht (neue Farbe) | daher | ATS 26,04 |
| 197,34 g/m² x 75,-- Materialeinsatzkosten pro m² | daher | ATS 14,80 |

Trotz höherer Materialkosten bei der erfindungsgemäßen Farbe mit der Bezeichnung "Passivit leicht" läßt sich eine Ersparnis von rund 43 %, also von ATS 26,04 erzielen.

Die Lösungsmittelbilanz sieht bei der in Rede stehenden Farbe ("Passivit leicht") etwa folgendermaßen aus:

Selbst wenn ein extremer Höchstsatz von 8 % Lösemittel bei einer Auftragsmenge von 197 g/m² angenommen wird, gehen pro m² 15,76 g Lösemittel in die Atmosphäre.

Bei 434 g herkömmlicher Kunstharz-Farbe mit einem üblichen Lösemittel-Gehalt im Bereich von 35 Masse-% werden hingegen 434 mal 35, das sind 151,90 g Lösemittel in die Umwelt abgegeben.

Dies bedeutet, daß bei Einsatz einer, wie eben näher erläuterten erfindungsgemäßen wasserverdünnbaren Dickschicht-Farbe, welche durch Leichtstoff-Partikel, also Kunstharz-Hohlkugeln, in ihrer Dichte vermindert und in ihrem Festkörper-Volumen erhöht ist, eine wesentliche Verminderung der Abgabe umweltschädigender Lösemittel in die Atmosphäre um fast 90 % erzielt werden kann, und dies bei einem Farb-System mit immerhin noch 8 Masse-% Lösemittel (was bei wasserdispergierten Farben an sich einen besonders hohen, üblicherweise nicht zum Einsatz kommenden Lösemittel-Gehalt darstellt).

Die neben der erwähnten Schonung der Umwelt, wie gezeigt, erzielbaren Kosteneinsparungen bei Einsatz der neuen, besonders korrosionsfesten Dickschicht-Farben stellen im globalen Umfeld wesentliche positive Faktoren dar, die mit der Erfindung erreicht werden können.

**Patentansprüche**

1. Dickschicht-Farbe mit mindestens einem farbgebenden Pigment, mindestens einer

   - Partikel unterschiedlicher Teilchengröße und/oder unterschiedlicher Form oder Struktur aufweisenden- Füllstoff- bzw. Extender-Komponente aus der Gruppe der Calcium-Carbonate, der Aluminium-Magnesium-Silikate und der Kalium-Aluminium-Magnesium-Silikate, mindestens einem - in Form von das Festkörper-Volumen der Farbe in Relation zu deren Festkörper-Masse (Festkörper-Gewicht) steigernden und die Dichte (spezifisches Gewicht) derselben vermindernden (Mikro-)Hohlkörpern, Hohlperlen od.dgl. mit Partikelgrößen von unter 1000 µm vorliegenden - auf Basis eines Polymers bzw. Kunstharzes gebildeten Leichtstoff, weiters mindestens einem Additiv, Zusatz- oder Hilfsstoff aus der Gruppe der Weichmacher, Dispergierhilfsmittel, Antiabsetzmittel, Stabilisiermittel, Entschäumer, Korrosions-Inhibitoren, Thixotropiermittel, Verdickungsmittel und Konservierungsmittel, sowie mit einem oder ohne Zusatz mindestens eines organischen Lösungsmittels, welche Komponenten in Mischung mit einem Bindemittel auf Basis mindestens eines Polymers bzw. Kunstharzes vorliegen, welche Dickschicht-Farbe wasserverdünnbar ist und als wässerige Dispersion vorliegt,

   **dadurch gekennzeichnet**,

   - daß die für den Korrosionsschutz vorgesehene, auf metallischem Untergrund dickschichtig auftragbare Farbe die - neben den oben genannten sonstigen Komponenten vorliegenden oder aber zum Teil an die Stelle mindestens einer der oben genannten Komponenten bzw. an die Stelle einer Extender-Komponente tretenden, das Festkörper-Volumen der Farbe in Relation zu deren Festkörper-Masse (Festkörper-Gewicht) steigernden und die Dichte (spezifisches Gewicht) derselben vermindernden - (Mikro-)Hohlkörper auf Polymer- bzw. Kunstharz-Basis entweder allein oder aber zusammen mit Partikeln mindestens eines anorganischen, mineral-basierten Leichtstoffes, enthält,

- daß dieselben in inniger Mischung mit mindestens einer glimmerartigen Extender-Komponente aus der Gruppe Eisenglimmer bzw. Eisenoxidglimmer (Hämatit) und silikatischen Glimmer vorliegen und
- daß die Dickschicht-Farbe im auftragsfähigen, "nassen" Zustand eine Dichte (ein spezifisches Gewicht) von 0,80 bis 1,50 g/cm$^3$ aufweist.

2. Farbe nach Anspruch 1, **dadurch gekennzeichnet**,

- daß die für den Korrosionsschutz vorgesehene, auf einen metallischen Untergrund dickschichtig auftragbare Farbe die - neben den oben genannten sonstigen Komponenten vorliegenden oder aber zum Teil an die Stelle mindestens einer der oben genannten Komponenten bzw. an die Stelle einer Extender-Komponente tretenden-(Mikro-)Hohlkörper auf Polymer- bzw. Kunstharz-Basis allein oder zusammen mit Partikeln mindestens eines anorganischen mineral-basierten Leichtstoffes, enthält,
- daß dieselben in inniger Mischung mit den plättchenförmigen Partikeln von Eisenglimmer bzw. Eisenoxidglimmer (Hämatit) als alleinige glimmerartige Extender-Kompomente vorliegen,
- wobei der Gehalt der nassen auftragsfähigen Farbe 5 bis 60 Masse-%, und bevorzugt 10 bis 50 Masse-% Eisen(oxid)glimmer, beträgt, und
- daß die Dickschicht-Farbe im auftragsfähigen, "nassen" Zustand eine Dichte von 0,90 bis 1,40 g/cm$^3$, bevorzugt von 0,95 bis 1,30 g/cm$^3$, aufweist.

3. Farbe nach Anspruch 1 oder 2, **dadurch gekennzeichnet**, daß die in derselben in inniger Mischung mit den plättchenförmigen Partikeln der glimmerartigen Extender-Komponente, bevorzugt Eisenglimmer bzw. Eisenoxidglimmer (Hämatitglimmer), vorliegenden polymer-basierten (Mikro-)Hohlkörper auf Basis eines Polyalkylen-Harzes, insbesondere eines Harzes auf Basis von Vinylidenchlorid/Acrylnitril und/oder Styrol/Acrylat, gebildet sind.

4. Farbe nach einem der Ansprüche 1 bis 3, **dadurch gekennzeichnet**,

- daß die in derselben in inniger Mischung mit den plättchenförmigen Partikeln der glimmerartigen Extender-Komponente, bevorzugt mit Eisenglimmer bzw. Eisenoxidglimmer (Hämatit), vorliegenden polymer-basierten (Mikro-)Hohlkörper eine Dichte (spezifisches Gewicht) von unter 0,7 g/cm$^3$, insbesondere von 0,02 bis 0,065 g/cm$^3$, besonders bevorzugt jedoch von 0,03 bis 0,045 g/cm$^3$, aufweisen und/oder
- daß Partikelgrößen im Bereich von 10 bis 80 μm, bevorzugt von 20 bis 50 μm, aufweisen und/oder
- daß die genannten (Mikro-)Hohlkörper eine im wesentlichen glatte und nicht-poröse Oberfläche mit organophilem Charakter aufweisen.

5. Farbe nach einem der Ansprüche 1 bis 4, **dadurch gekennzeichnet**, daß die in derselben in inniger Mischung mit den plättchenförmigen Partikeln der glimmerartigen Extender-Komponente, bevorzugt Eisenglimmer bzw. Eisenoxidglimmer (Hämatit), vorliegenden polymer-basierten (Mikro-)Hohlkörper Produkte mit dem Handelsnamen "Expansel", bevorzugt "Expansel 551", der Firma Casco Products (Schweden) sind.

6. Farbe nach einem der Ansprüche 1 bis 5, **dadurch gekennzeichnet**,

- daß die in derselben in inniger Mischung mit den plättchenförmigen Partikeln der glimmerartigen Extender-Komponente, bevorzugt Eisen- bzw. Eisenoxidglimmer (Hämatit), vorliegenden polymer-basierten (Mikro-)Hohlkörper, in der Farbe im auftragsfähigen, "nassen Zustand" in einer Menge von 0,10 bis 5 Massen-%, bevorzugt von 0,5 bis 3,5 Massen-%, enthalten sind, und/oder
- daß das Festkörper-Volumen der polymer-basierten (Mikro-)Hohlkörper in der auftragsfähigen, "nassen" Farbe 10 bis 80 %, bevorzugt 30 bis 60 %, des gesamten Volumens aller in der Farbe enthaltenen Festkörper-Komponenten beträgt, und/oder
- daß das Gesamt-Volumen aller Festkörper-Komponenten einschließlich der polymer-basierten (Mikro-)Hohlkörper, in der auftragsfähigen, "nassen" Farbe 10 % bis 80 %, vorzugsweise 20 % bis 70 %, jeweils bezogen auf das Gesamt-Volumen der Farbe im auftragsfähigen, "nassen" Zustand, beträgt.

7. Farbe nach einem der Ansprüche 1 bis 6, **dadurch gekennzeichnet**, daß sie

| | |
|---|---|
| 30 bis 60 Masse-%, | vorzugsweise 35 bis 55 Masse-%, mindestens eines Bindemittels auf Kunstharzbasis, bevorzugt auf Basis eines Acrylat-Harzes, wie z.B. Rein-Acrylat oder Styrol-Acrylat, in Form einer 40 bis 60 %igen Dispersion in Wasser; |
| 5 bis 20 Masse-%, | vorzugsweise 6 bis 14 Masse-%, mindestens eines farbgebenden Pigments (oder alternativ dazu |
| 0,5 bis 10 Masse-%, | vorzugsweise 0,6 bis 8 Masse-%, eines Pigmentteiges); |
| 10 bis 25 Masse-%, | vorzugsweise 12 bis 20 Masse-%, eines Extenders oder Extendergemisches, exklusive der glimmerartigen Extender-Komponente, |
| 0,2 bis 3 Masse-% | mindestens eines Additivs aus der Gruppe der Dispergier-Hilfsmittel, Anti-Absetzmittel, Entschäumer und Korrosions-Inhibitoren; |
| 0 bis 8 Masse-%, | vorzugsweise 1 bis 5 Masse-%, mindestens eines Weichmachers; |
| 0 bis 8 Masse-%, | vorzugsweise 1 bis 5 Masse-%, eines Verdickers, auf Polyurethan- oder anderer, gegebenenfalls auch mineralischer Basis; |
| 0 bis 8 Masse-%, | vorzugsweise 1 bis 5 Masse-%, eines organischen Lösungsmittels, insbesondere (Test-) Benzin und/oder höhere Alkohole; |
| 0 bis 1 Masse-%, | vorzugsweise 0,2 bis 0,5 Masse-%, eines Konservierungs-Mittels und schließlich |
| 0,1 bis 5,5 Masse-%, | bevorzugt 0,5 bis 4,5 Masse-%, (Mikro-)Hohlkörper auf Polymer- bzw. Kunststoff-Basis sowie |
| 5 bis 60 Masse-%, | vorzugsweise 10 bis 40 Masse-%, Eisen(oxid)-Glimmer (Hämatit) als, bevorzugterweise alleinige, glimmerartige Extender-Komponente, und gegebenenfalls |
| 0,5 bis 12 Masse-%, | vorzugsweise 1,5 bis 9 Masse-%, eines silikatischen Glimmers als zusätzliche glimmerartige Extender-Komponente |

enthält, wobei alle Masse-%-Angaben jeweils auf die gesamte Menge der als auftragsfähige, "nasse" Farbe vorliegenden Mischung aller in ihr jeweils enthaltenen Komponenten bezogen sind.

8. Farbe nach einem der Ansprüche 1 bis 7, **dadurch gekennzeichnet**,

- daß die, gegebenenfalls zusätzlich zu den polymer-basierten (Mikro-)Hohlkörpern vorhandenen, Partikel der anorganischen, mineral-basierten Leichtstoff-Komponente mit Blähsilikat-Partikeln aus der Gruppe geblähter Ton, Perlit, Vermiculit und Glas, und bevorzugt mit Blähglas-Partikeln, gebildet ist, und/oder
- daß die, gegebenenfalls zusätzlich zu den polymer-basierten (Mikro-)Hohlkörpern auf Polymer- bzw. Kunststoff-Basis vorhandenen, Partikel der anorganischen, mineral-basierten Leichtstoff-Komponente eine Dichte (scheinbare Dichte) im Bereich von 0,03 bis 0,7 $g/cm^3$, insbesondere von 0,05 bis 0,5 $g/cm^3$, aufweisen, und/oder
- daß die, gegebenenfalls zusätzlich zu den polymer-basierten (Mikro-)Hohlkörpern vorhandenen, Partikel der anorganischen, mineral-basierten Leichtstoff-Komponente Partikelgrößen im Bereich von 10 bis 150 µm, bevorzugt von 20 bis 80 µm, aufweisen und/oder
- daß die, gegebenenfalls zusätzlich zu den polymer-basierten (Mikro-)Hohlkörpern vorhandenen, Partikel der anorganischen, mineral-basierten Leichtstoff-Komponente im wesentlichen hohl-sphäroide Form und im wesentlichen eine nicht-poröse Oberfläche aufweisen.

9. Verfahren zur Herstellung einer dickschichtig auftragbaren Farbe nach einem der Ansprüche 1 bis 8, **dadurch gekennzeichnet**, daß die wässerige Bindemittel-Dispersion und die im Anspruch 1 bzw. 2 genannten Komponenten der Gruppe: farbgebende Pigmente, glimmerartige Extender-Komponente, bevorzugt Eisenglimmer- bzw. Eisenoxidglimmer-Partikel, andere Extender, eventuell vorgesehene Leichtstoffe aus der Gruppe der natürlichen oder künstlichen, insbesondere geblähten, anorganischen, mineral-basierten Leichtstoffe, sowie weiters Additive und eventuell Lösungsmittel unter Vermeidung unerwünschter chemischer Reaktionen und unter Unterdrückung unerwünschter Schaumbildung in einem Mischer mit Rührwerk innig miteinander vermengt werden und daß der so erhaltenen Mischung die (Mikro-)Hohlkörper auf Polymer- bzw. Kunstharz-Basis gemäß den Mengen- bzw. Volumsangaben in den oben genannten, vorangegangenen Ansprüchen in vorher mit Wasser angefeuchteter Form zugesetzt und innig zugemischt werden.

10. Verwendung einer Dickschicht-Farbe, gemäß einem der Ansprüche 1 bis 9, bzw. hergestellt gemäß Anspruch 9 als Korrosionsschutz-Farbe für - Oberflächen aus Nichteisen-Metallen aufweisende - Objekte, insbesondere für - feuerverzinkte Oberflächen aufweisende oder mit einer zink-basierten Metall-Beschichtung versehene - Eisen- und Stahl Konstruktionen, wie insbesondere Masten für den Stromtransport.

**Claims**

1. Thick layer paint comprising

   at least one colouring pigment,
   at least one filler or extender component, which includes particles of different particle size and/or of different shape or structure, and which is selected from the group consisting of calcium carbonates, aluminium-magnesium silicates and potassium-aluminium-magnesium silicates;
   at least one light material formed on the basis of a polymer or an artificial resin in the form of hollow (micro-) bodies, hollow beads or the like which increase the volume of solids of the paint in relation to its mass of solids (weight of solids), while decreasing its density (specific weight), and are present in a particle size of below 1000 $\mu$m,
   furthermore at least one additive, admixed material or adjuvant selected from the group which consists of plasticisers, dispersing adjuvants, anti-sedimentation agents, stabilisers, anti-foaming agents, corrosion inhibitors, thixotropy promoters, thickeners and preservation agents, and having
   an additive or none of at feast one organic solvent,
   said components being present in a mixture with a binder on the basis of at least
   one polymer or artificial resin, and said thick layer paint being capable of being diluted with water and is present as an aqueous dispersion,
       **characterised in**

   - that the paint coatable in a thick layer, which is provided for protection against corrosion and being coatable on a metallic substratum, apart from the above-mentioned other components or being partially present instead of at least one of the above-mentioned components or instead of an extender component, includes either said hollow (micro-)bodies on the basis of a polymer or resin alone, which increase the volume of solids of the paint in relation to its mass of solids (weight of solids), white decreasing its density (specific weight), or together with particles of at least one inorganic light material based on a mineral material,
   - that they are present in an intimate mixture with at least one mica-like extender component selected from the group consisting of iron mica or iron oxide mica (hematite) and silicate mica, and
   - that said thick layer paint has a density (specific weight) of 0.80 to 1.50 g/cm$^3$ in coatable, "wet" condition.

2. Paint according to claim 1, **characterised in**

   - that the paint coatable in a thick layer, which is provided for protection against corrosion and being coatable on a metallic substratum, apart form the above-mentioned other components or being partially present instead of at least one of the above-mentioned components or instead of an extender component, includes either said hollow (micro-)bodies on the basis of a polymer or resin alone, or together with particles of at least one inorganic light material based on a mineral material,
   - that they are present in an intimate mixture with the platelet-shaped particles of iron mica or iron oxide mica (hematite) as the only mica-like extender component,
   - the contents of the wet coatable paint being 5 to 60 mass-%, and preferably 10 to 50 mass-% of iron (oxide) mica, and
   - that said thick layer paint has a density of 0.90 to 1.40 g/cm$^3$, preferably of 0.95 to 1.30 g/cm$^3$, in coatable "wet" condition.

3. Paint according to claim 1 or 2, **characterised in that** the polymer based hollow (micro-)bodies, which are present in it in an intimate mixture with the platelet-shaped particles of the mica-like extender component, preferably iron mica or iron oxide mica (hematite), are formed on the basis of a polyalkylene resin, particularly of a resin on the basis of vinylidene chloride/acrylnitrile and/or styrene/acrylate.

4. Paint according to any of claims 1 to 3, **characterised in**

   - that the polymer based hollow (micro-)bodies, which are present in it in an intimate mixture with the platelet-shaped particles of the mica-like extender component, preferably with iron mica or iron oxide mica (hematite), have a density (specific weight) of below 0.7 g/cm$^3$, particularly of 0.02 to 0.065 g/cm$^3$, particularly preferably, however, of 0.03 to 0.045 g/cm$^3$, and/or
- that they have a particle size within the range of 10 to 80 μm, preferably of 20 to 50 μm, and/or
- that said hollow (micro-)bodies have a substantially smooth and non-porous surface of an organophile character.

**5.** Paint according to any of claims 1 to 4, **characterised in that** the polymer based hollow (micro-)bodies, which are present in it in an intimate mixture with the platelet-shaped particles of the mica-like extender component, preferably iron mica or iron oxide mica (hematite), are products of the trademark "Expansel", preferably "Expansel 551", of the firm Casco products (Sweden).

**6.** Paint according to any of claims 1 to 5, **characterised in**

- that the polymer based hollow (micro-)bodies, which are present in it in an intimate mixture with the platelet-shaped particles of the mica-like extender component, preferably iron mica or iron oxide mica (hematite), are comprised within the coatable "wet" paint in an amount of 0.10 to 5 mass-%, preferably 0.5 to 3.5 mass-%, and/or
- that the volume of solids of the polymer based hollow (micro-)bodies within the coatable "wet" paint amounts to 10 to 80%, preferably 30 to 60%, of the total volume of all solid components contained in the paint, and/or
- that the total volume of all solid components, the polymer based hollow (micro-) bodies included, within the coatable "wet" paint amounts to 10% to 80%, preferably 20% to 70%, each in relation to the total volume of the paint in coatable "wet" condition.

**7.** Paint according to any of claims; 1 to 6, **characterised in that** it contains

| | |
|---|---|
| 30 to 60 mass-%, | preferably 35 to 55 mass-%, of at least one binder based on an artificial resin, preferably on the basis of an acrylate resin, such as pure acrylate or styrene-acrylate, in form of an aqueous dispersion of 40 to 60%; |
| 5 to 20 mass-%, | preferably 6 to 14 mass-%, of at least one colouring pigment (or alternatively |
| 0.5 to 10 mass-%, | preferably 0.6 to 8 mass-%, of a pigment dough); |
| 10 to 25 mass-%, | preferably 12 to 20 mass-%, of an extender or an extender blend, the mica-like extender component being excluded, |
| 0.2 to 3 mass-% | of at least one additive selected from the group which comprises dispersing adjuvants, anti-sedimentation agents, anti-foaming agents and corrosion inhibitors; |
| 0 to 8 mass-%, | preferably 1 to 5 mass-%, of at least one plasticiser; |
| 0 to 8 mass-%, | preferably 1 to 5 mass-%, of a thickener on a polyurethane basis or another basis, optionally also on a mineral basis; |
| 0 to 8 mass-%, | preferably 1 to 5 mass-%, of an organic solvent, particularly (testing) petrol and/or higher alcohols; |
| 0 to 1 mass-%, | preferably 0.2 to 0.5 mass-%, of a preservation agent, and finally |
| 0.1 to 5.5 mass-%, | preferably 0.5 to 4.5 mass-%, of hollow (micro-)bodies on a polymer or plastic material basis, as well as |
| 5 to 60 mass-%, | preferably 10 to 40 mass-%, iron (oxide) mica (hematite) as a mica-like extender component, preferably the only one; and optionally |
| 0.5 to 12 mass-%, | preferably 1.5 to 9 mass%, of a silicate mica as an additional mica-like extender component, |

all indications in mass-% being each in relation to the total quantity of the mixture of all components contained in it and being present as the coatable "wet" paint.

**8.** Paint according to any of claims 1 to 7, **characterised in**

- that the particles of the inorganic light material component based on a mineral material, optionally being present in addition to the polymer based hollow (micro-) bodies, is formed from particles of expanded silicate selected from the group consisting of swelling clay, perlite, vermiculite and glass, and preferably from expanded glass particles, and/or

13

- that the particles of the inorganic light material component based on a mineral material, optionally being present in addition to the polymer based hollow (micro-) bodies on a polymer or plastic basis, have a density (apparent density) within the range of 0,03 to 0.7 g/cm$^3$, particularly of 0.05 to 0.5 g/cm$^3$, and/or
- that the particles of the inorganic light material component based on a mineral material, optionally being present in addition to the polymer based hollow (micro-) bodies, have a particle size within the range of 10 to 150 μm, preferably 20 to 80 μm, and/or
- that the particles of the inorganic light material component based on a mineral material, optionally being present in addition to the polymer based hollow (micro-) bodies, have a substantially hollow spheroid shape and a substantially non-porous surface.

9. Process for preparing a paint coatable in a thick layer according to any of claims 1 to 8, **characterised in that** the aqueous binder dispersion and the components mentioned in claims 1 or 2, respectively, of the group of: colouring pigments, mica-like extender component, preferably particles of iron mica or iron oxide mica, other extenders, optionally provided light material of the group of natural or artificial inorganic mineral based light materials, particularly expanded ones, as well as further additives and optionally solvents, are intimately mixed together avoiding undesirable chemical reactions and suppressing any undesirable foam development within a mixer having a stirrer, and that the hollow (micro-)bodies on a polymer or artificial resin basis are added in a previously water moistened form to the, thus, obtained mixture in accordance with the quantities or volumes indicated in the above-mentioned previous claims, and are intimately admixed.

10. The use of a thick layer paint according to any of claims 1 to 9 or prepared according to claim 9 as a corrosion protection paint for objects which have a surface of a non-iron metal, particularly for iron or steel structures having a hot galvanised surface or a surface provided with a metal coating based on zinc, particularly masts for conveying current.

**Revendications**

1. Peinture applicable en couche épaisse comportant au moins un pigment colorant, au moins une charge, ou produit de coupage, présentant des particules de différentes granulométries et/ou de différentes formes ou structures et appartenant au groupe carbonate de calcium, silicate double d'aluminium et de magnésium et silicate triple de potassium, d'aluminium et de magnésium, au moins une substance à faible poids moléculaire formée à base d'un polymère ou d'une résine synthétique - se présentant sous la forme de (micro)corps creux, perles creuses ou similaires de moins de 1000 μm, augmentant le volume d'extraits secs de la peinture par rapport à sa masse d'extraits secs (poids d'extraits secs) et réduisant la densité (poids volumique) de ladite peinture, ladite peinture comportant en outre au moins un additif, adjuvant ou produit auxiliaire du groupe des plastifiants, dispersants, agents anti-sédimentation, stabilisants, anti-moussants, inhibiteurs de corrosion, agents thixotropes, épaississants et conservateurs, et comportant ou non au moins un solvant organique, les composants précités étant présents en mélange avec un liant à base au moins d'un polymère ou d'une résine synthétique, ladite peinture applicable en couche épaisse étant diluable à l'eau et se présentant sous la forme d'une dispersion aqueuse,
    caractérisée en ce que

    - la peinture applicable en couche épaisse sur un subjectile métallique et prévue pour la protection anti-corrosion contient, soit seuls soit avec des particules d'au moins une substance inorganique à base minérale et à faible poids moléculaire, les (micro)corps creux à base de polymère ou de résine synthétique augmentant le volume d'extraits secs de la peinture par rapport à sa masse d'extraits secs (poids d'extraits secs) et réduisant la densité (poids volumique) de ladite peinture et présents en plus des autres composants précités ou en remplacement partiel d'au moins un des composants précités ou en remplacement d'une charge,
    - les (micro)corps creux sont présents en mélange intime avec au moins une charge de type micacé du groupe fer micacé ou oxyde de fer micacé (hématite) et mica silicatisé et
    - la peinture applicable en couche épaisse présente, à l'état « fluide » applicable, une densité (un poids volumique) comprise entre 0,80 et 1,50 g/cm$^3$.

2. Peinture selon la revendication 1, caractérisée en ce que

    - la peinture applicable en couche épaisse sur un subjectile métallique et prévue pour la protection anti-corrosion contient, soit seuls soit avec des particules d'au moins une substance inorganique à base minérale et à faible poids moléculaire, les (micro)corps creux à base de polymère ou de résine synthétique présents en plus des autres composants précités ou en remplacement partiel d'au moins un des composants précités ou en remplacement d'une charge,

- lesdits (micro)corps creux sont présents en mélange intime avec les particules, en forme de lamelles, de fer micacé ou d'oxyde de fer micacé (hématite) en tant que seule charge micacée,
- la teneur de la peinture fluide applicable en (oxyde de) fer micacé est de 5 à 60 % en poids, et de préférence de 10 à 50 % en poids
- la peinture applicable en couche épaisse présente, à l'état « fluide » applicable, une densité comprise entre 0,90 et 1,40 g/cm$^3$, et de préférence comprise entre 0,95 et 1,30 g/cm$^3$.

3. Peinture selon la revendication 1 ou 2, caractérisée en ce que les (micro)corps creux à base de polymère présents dans ladite peinture en mélange intime avec les particules en forme de lamelles de la charge de type micacé, de préférence du fer micacé ou de l'oxyde de fer micacé (hématite), sont formés à base d'une résine polyalkylène, en particulier une résine à base de chlorure de vinylidène-acrylonitrile et/ou de styrène-acrylate.

4. Peinture selon l'une des revendications 1 à 3, caractérisée en ce que

- les (micro)corps creux à base de polymère présents dans ladite peinture en mélange intime avec les particules, en forme de lamelles, de la charge de type micacé, de préférence du fer micacé ou de l'oxyde de fer micacé (hématite), présentent une densité (un poids volumique) inférieure à 0,7 g/cm$^3$ et en particulier comprise entre 0,02 et 0,065 g/cm$^3$, de preférence toutefois entre 0,03 et 0,045 g/cm$^3$, et/ou
- la taille des particules est comprise entre 10 et 80 µm, de préférence entre 20 et 50 µm et/ou
- les (micro)corps cités présentent une surface sensiblement lisse et non poreuse à caractère organophilique.

5. Peinture selon l'une des revendications 1 à 4, caractérisée en ce que les (micro)corps creux à base de polymère présents dans ladite peinture en mélange intime avec les particules, en forme de lamelles, de la charge de type micacé, de préférence du fer micacé ou de l'oxyde de fer micacé (hématite), sont des produits commercialisés par la société Casco Products (Suède) sous l'appellation commerciale « Expansel », de préférence « Expansel 551 ».

6. Peinture selon l'une des revendications 1 à 5, caractérisée en ce que

- les (micro)corps creux à base de polymère présents dans ladite peinture en mélange intime avec les particules, en forme de lamelles, de la charge de type micacé, de préférence du fer micacé ou de l'oxyde de fer micacé (hématite), sont présents dans la peinture à l'état « fluide » applicable à hauteur d'un pourcentage pondéral compris entre 0,10 et 5 %, de préférence entre 0,5 et 3,5 %, et/ou
- le volume d'extraits secs des (micro)corps creux à base de polymère dans la peinture « fluide » applicable est compris entre 10 et 80 %, de préférence entre 30 et 60 % du volume total de l'ensemble des extraits secs de la peinture, et/ou
- le volume total de l'ensemble des extraits secs, y compris les (micro)corps creux à base de polymère, dans la peinture « fluide » applicable, représente 10 à 80 %, de préférence 20 à 70 %, du volume total de la peinture à l'état « fluide » applicable.

7. Peinture selon l'une des revendications 1 à 6, caractérisée en ce qu'elle comprend

à hauteur de 30 à 60 % en poids,
de préférence 35 à 55 % en poids, au moins un liant à base de résine synthétique, de préférence à base d'une résine acrylique, comme par exemple une résine d'acrylate pur ou une résine styrène-acrylate, sous la forme d'une dispersion aqueuse à 40 à 60 % ;
à hauteur de 5 à 20 % en poids,
de préférence 6 à 14 % en poids, au moins un pigment colorant (ou, en variante,
à hauteur de 0,5 à 10 % en poids,
de préférence 0,6 à 8 % en poids, une pâte pigmentaire) ;
à hauteur de 10 à 25 % en poids,
de préférence 12 à 20 % en poids, une charge ou un mélange de charge, hormis la charge de type micacé,
à hauteur de 0,2 à 3 % en poids,
au moins un additif du groupe des agents dispersants, agents anti-sédimentation, anti-moussants et inhibiteurs de corrosion ;
à hauteur de 0 à 8 % en poids,

de préférence 1 à 5 % en poids, au moins un plastifiant ;
à hauteur de 0 à 8 % en poids,
de préférence 1 à 5 % en poids, un épaississant à base de polyuréthane ou autre substance éventuellement également minérale ;
à hauteur de 0 à 8 % en poids,
de préférence 1 à 5 % en poids, un solvant organique, en particulier du white-spirit et/ou des alcools supérieurs ;
à hauteur de 0 à 1 % en poids,
de préférence 0,2 à 0,5 % en poids, un conservateur, et enfin
à hauteur de 0,1 à 5,5 % en poids,
de préférence 0,5 à 4,5 % en poids, des (micro)corps creux à base de polymère ou de matière plastique ainsi que
à hauteur de 5 à 60 % en poids,
de préférence 10 à 40 % en poids, du fer micacé ou de l'oxyde de fer micacé (hématite) en tant que charge de type micacé, de préférence unique, et éventuellement
à hauteur de 0,5 à 12 % en poids
de préférence 1,5 % à 9 % en poids, un mica silicatisé en tant que charge micacée supplémentaire,

toutes les indications de % pondéral étant rapportées à la totalité du mélange de composants contenus dans la peinture « fluide » applicable.

**8.** Peinture selon l'une des revendications 1 à 7, caractérisée en ce que

- les particules de substance inorganique à base minérale et à faible poids moléculaire, présentes éventuellement en plus des (micro)corps creux à base de polymère, consistent en des particules de silicate expansé du groupe constitué par l'argile expansé, la perlite expansée, la vermiculite expansée et le verre expansé, et de préférence en des particules de verre expansé, et/ou
- les particules de substance inorganique à base minérale et à faible poids moléculaire, présentes éventuellement en plus des (micro)corps creux à base de polymère ou de matière plastique, présentent une densité (densité apparente) comprise entre 0,03 et 0,7 g/cm$^3$, en particulier entre 0,05 et 0,5 g/cm$^3$, et/ou
- les particules de substance inorganique à base minérale et à faible poids moléculaire, présentes éventuellement en plus des (micro)corps creux à base de polymère, ont une granulométrie comprise entre 10 et 150 µm, de préférence entre 20 et 80 µm, et/ou
- les particules de substance inorganique à base minérale et à faible poids moléculaire, présentes éventuellement en plus des (micro)corps creux à base de polymère, affectent sensiblement une forme de sphéroïde creux et présentent une surface sensiblement non poreuse.

**9.** Procédé de fabrication d'une peinture applicable en couche épaisse selon l'une des revendications 1 à 8, caractérisé en ce que la dispersion aqueuse du liant et les composants (cités à la revendication 1 ou 2) du groupe : pigment colorant, charge de type micacé, de préférence des particules de fer micacé ou d'oxyde de fer micacé, autres charges, éventuellement des substances à faible poids moléculaire du groupe des substances à faible poids moléculaire inorganiques à base minérale, naturelles ou synthétiques, en particulier expansées, ainsi que d'autres additifs et éventuellement des solvants - sont intimement mélangés dans un mélangeur équipé d'un agitateur en empêchant les réactions chimiques indésirables et en empêchant la formation de mousse indésirable, et en ce que les (micro) corps creux à base de polymère ou de résine synthétique préalablement humidifiés à l'eau sont ajoutés et mélangés intimement au mélange ainsi obtenu selon les indications de quantité et/ou de volume citées dans les revendications précédentes.

**10.** Utilisation d'une peinture applicable en couche épaisse selon l'une des revendications 1 à 8 ou fabriquée selon la revendication 9, en tant que peinture de protection anti-corrosion pour des objets présentant des surfaces en métaux non-ferreux, en particulier des constructions en fer ou en acier présentant des surfacer galvanisées à chaud ou dotées d'un revêtement métal à base de zinc, comme en particulier les mâts destinés au transport du courant électrique.